(19) Europäisches Patentamt
European Patent Office
Office européen des brevets

(11) **EP 4 234 612 A1**

(12) **EUROPEAN PATENT APPLICATION**
published in accordance with Art. 153(4) EPC

(43) Date of publication:
**30.08.2023 Bulletin 2023/35**

(21) Application number: **21883053.7**

(22) Date of filing: **30.09.2021**

(51) International Patent Classification (IPC):
**C08J 5/18** (2006.01)          **C08G 63/181** (2006.01)

(52) Cooperative Patent Classification (CPC):
**C08G 63/181; C08J 5/18;** Y02W 30/80

(86) International application number:
**PCT/KR2021/013450**

(87) International publication number:
**WO 2022/085981 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2020 KR 20200137685**

(71) Applicant: **SK microworks Co., Ltd.**
**Suwon-si, Gyeonggi-do 16336 (KR)**

(72) Inventors:
• YANG, Joo Ho
  Suwon-si, Gyeonggi-do 16338 (KR)
• KIM, Yong Deuk
  Suwon-si, Gyeonggi-do 16338 (KR)
• KIM, Chul Kyu
  Suwon-si, Gyeonggi-do 16338 (KR)

(74) Representative: **Dehns**
**St. Bride's House
10 Salisbury Square
London EC4Y 8JD (GB)**

(54) **POLYESTER FILM, AND HEAT-SHRINKABLE LABEL AND PACKAGING MATERIAL COMPRISING SAME**

(57)     A polyester film according to one embodiment uniformly shrinks during a heat-shrinking process as the shrinkage rate is adjusted for each temperature range, and thus after shrinkage the polyester film can be attached to a container without any defects in external appearance such as distortion or curling. Therefore, the polyester film according to said embodiment can be usefully applied, as a heat-shrinkable label or packaging material, to containers of various products comprising drinks or food.

[Fig. 5]

EP 4 234 612 A1

## Description

**Technical Field**

Embodiments relate to a polyester film and to a heat-shrinkable label and a packaging material comprising the same. Specifically, the embodiments relate to a polyester film having shrinkage uniformity and to a heat-shrinkable label and a packaging material that comprise the same and can be applied to various containers.

**Background Art**

In recent years, as containers for beverages or foods are manufactured in various forms, and there are cases in which full wrapping is applied in order to attract the attention of consumers, heat-shrinkable labels and packaging materials are attracting attention. A heat-shrinkable label or packaging material takes advantage of the feature of a polymer film that tends to shrink to a shape before stretching thereof at a certain temperature or higher once it has been oriented by stretching thereof. In a conventional process of heat shrinkage labeling or packaging, a heat-shrinkable film is printed in a desired design, cut, rolled up, bonded at both ends with an adhesive solvent, loosely wrapped around a container, and then shrunk as heat is applied thereto.

A heat-shrinkable film used in the above is required to have not only such basic properties as thermal resistance, chemical resistance, weatherability, and printability, but also container sealability, heat shrinkage uniformity, sliding characteristics in the longitudinal direction, and crack resistance. Conventionally, polyvinyl chloride films, polystyrene films, polypropylene films, and the like have been used as heat-shrinkable films. In recent years, polyester films having such properties as high thermal resistance and weatherability, the convenience of incineration, and excellent printability have been used as well.

However, since a conventional polyester film has a fast shrinkage speed and a high shrinkage stress, there have been defects caused by non-uniform shrinkage or distortions of a plastic container. Thus, Korean Laid-open Patent Publication No. 2002-0062838 discloses a technique in which 5% by weight or more of a polyester elastomer is added to a heat-shrinkable polyester film to suppress the generation of wrinkles, shrinkage stains, distortions, and the like when the film is used for full wrapping of plastic bottles.

[Prior Art Document]

(Patent Document 1) Korean Laid-open Patent Publication No. 2002-0062838

**Disclosure of Invention**

**Technical Problem**

Conventionally, a heat-shrinkable label or packaging material has been applied to a heat shrinkage process once the size of the film for the shape of a container and the shrinkage rate at a specific temperature have been adjusted.

However, it is not possible to prevent the problem that the film rapidly shrinks at a specific temperature, resulting in an uneven appearance or wrinkles, when the temperature is raised in a heat shrinkage process.

Accordingly, the embodiments aim to provide a polyester film that can reduce defects by enhancing shrinkage uniformity and a heat-shrinkable label and a packaging material comprising the same.

**Solution to the Problem**

According to an embodiment, there is provided a polyester film, which comprises a copolymerized polyester resin in which a diol comprising ethylene glycol and one or more comonomers; and an aromatic dicarboxylic acid are polymerized, wherein when $T_{a-b}$ is defined as in the following equation, $T_{75-70}$ is 1%/°C to 3%/°C, and $T_{90-80}$ is 2%/°C to 3%/°C in the main shrinkage direction.

$$T_{a-b} \ (\%/°C) = \frac{shrinkage \ at \ a°C \ (\%) - shrinkage \ at \ b°C \ (\%)}{a \ (°C) - b \ (°C)}$$

According to another embodiment, there is provided a heat-shrinkable label or a packaging material comprising the polyester film.

**Advantageous Effects of Invention**

The polyester film according to the embodiment shrinks uniformly in a heat shrinkage process since the slope of the shrinkage rate for each temperature section is adjusted. Thus, it can be closely adhered to a container without appearance defects such as distortion or curling upon shrinkage.

In addition, such shrinkage characteristics of the polyester film can be achieved in a desired range by controlling the components and contents of a copolymerized polyester resin constituting it and controlling the process conditions in the preparation process.

Accordingly, the polyester film according to the embodiment can be advantageously applied as a heat-shrinkable label or packaging material to containers of various products including beverages and foods.

**Brief Description of Drawings**

Figs. 1a and 1b each show a heat-shrinkable label applied to a container before and after heat shrinkage thereof.

Fig. 2 shows a method of measuring the shrinkage of a polyester film in Test Example 1.

Fig. 3 shows a method of evaluating the skirt ratio of a polyester film in Test Example 2.

Fig. 4 shows a method of evaluating the shrinkage stress of a polyester film in Test Example 3.

Fig. 5 shows a method of evaluating the shrinkage uniformity of a polyester film in Test Example 4.

Fig. 6a shows an example of a polyester film that is partitioned into a plurality of lattice units of the same size and shrunk after thermal treatment.

Fig. 6b shows that a virtual lattice unit is applied to the shrunk lattice units shown in Fig. 6a.

Figs. 6c and 6d each show that a virtual lattice unit is applied after the lattice units of Fig. 6b are partitioned by an increased size of 2 and 4 times, respectively, followed by shrinkage.

<Explanation of Reference Numerals>

| | | | |
|---|---|---|---|
| 1: | heat shrinkage-labeled product | 2: | stress tester |
| 11: | sleeve label (before shrinkage) | 11a: | sleeve label after shrinkage |
| 10: | heat-shrinkable label | 20: | container |
| 21: | zig | 22: | load cell |
| 100: | polyester film (before shrinkage) | 100a: | polyester film after shrinkage |
| 110: | lattice printing | 111: | lattice unit |
| 111a: | uniformly shrunk lattice unit | | |
| 111b: | non-uniformly shrunk lattice unit | 111c: | lattice units with large distortions |
| 120: | adhesive part | L0: | side of a virtual lattice unit |
| L1: | side of a shrunk lattice unit | d: | spaced distance between L0 and L1 |
| s: | size | D: | diameter |
| L: | length of a film | W: | width of a film |
| MD: | longitudinal direction of a film | | |
| $S_{MAX}$: | maximum stress | $S_{RES}$: | residual stress |

**Best Mode for Carrying out the Invention**

In the following description of the embodiments, in the case where an element is mentioned to be formed "on" or "under" another element, it means not only that one element is directly formed "on" or "under" another element, but also that one element is indirectly formed on or under another element with other element(s) interposed between them.

For the sake of description, the sizes of individual elements in the appended drawings may be exaggeratedly depicted, and they may differ from the actual sizes.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

In the present specification, a singular expression is understood to encompass a singular or plural expression, interpreted in context, unless otherwise specified.

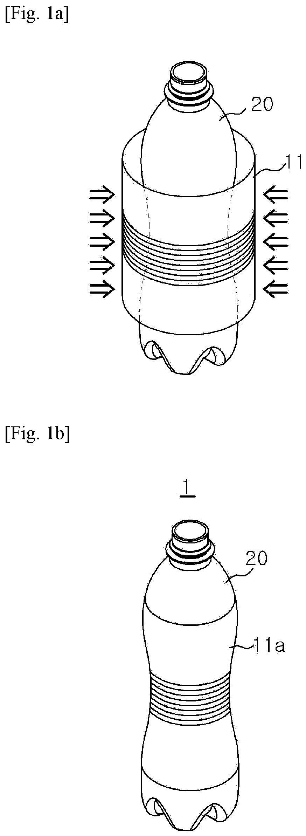

Figs. 1a and 1b each show a heat-shrinkable label applied to a container before and after heat shrinkage thereof. Referring to Fig. 1a, a heat-shrinkable film is printed with a desired design and rolled, and both ends are bonded with an adhesive solvent to prepare a label (11) in the form of a sleeve, which is loosely wrapped around a container (20) and heated. As a result, as shown in Fig. 1b, a product in which the heat shrunk label (11a) adheres along the curve of the container (20) is obtained.

There is a problem in that a conventional polyester film rapidly shrinks at a specific temperature, resulting in an uneven appearance or wrinkles, when the temperature is raised in a heat shrinkage process.

Accordingly, the embodiments provide a polyester film that can reduce defects by enhancing shrinkage uniformity.

**Characteristics of a polyester film**

In the polyester film according to an embodiment, when $T_{a-b}$ is defined as in the following equation, $T_{75-70}$ is 1%/°C to 3%/°C, and $T_{90-80}$ is 2%/°C to 3%/°C in the main shrinkage direction.

$$T_{a-b} \ (\%/°C) = \frac{shrinkage \ at \ a°C \ (\%) - shrinkage \ at \ b°C \ (\%)}{a \ (°C) - b \ (°C)}$$

Within the above ranges, it shrinks uniformly in a heat shrinkage process since the slope of the shrinkage rate for each temperature section is adjusted. Thus, it can be closely adhered to a container without appearance defects such as distortion or curling upon shrinkage.

Specifically, $T_{75-70}$ may be 1%/°C to 2.5%/°C, 1%/°C to 2%/°C, 1.5%/°C to 3%/°C, 1.5%/°C to 2.5%/°C, 2%/°C to 3%/°C, or 2.5%/°C to 3%/°C. In addition, $T_{80-75}$ may be 1%/°C to 5%/°C, 1%/°C to 4%/°C, 2%/°C to 5%/°C, or 2%/°C to 4%/°C. In addition, $T_{90-80}$ may be 2%/°C to 2.5%/°C or 2.5%/°C to 3%/°C. In addition, $T_{100-90}$ may be 0%/°C to 2%/°C or 0.2%/°C to 1.5%/°C.

In addition, in the polyester film according to an embodiment, the shrinkage rate in the main shrinkage direction with respect to temperature may be adjusted within a specific range.

For example, when the shrinkage rate in the main shrinkage direction of the polyester film upon thermal treatment at a temperature of X°C for 10 seconds is defined as $T_X$, the ranges of $T_{70}$, $T_{75}$, $T_{80}$, $T_{90}$, and $T_{100}$ may be adjusted. The thermal treatment for obtaining $T_X$ may specifically refer to immersing the polyester film in hot water at X°C for 10 seconds.

The polyester film may have a $T_{70}$ of 0% to 30%, 0% to 20%, or 5% to 15%. The polyester film may have a $T_{75}$ of 0% to 40%, 5% to 40%, or 10% to 30%. The polyester film may have a $T_{80}$ of 10% to 60%, 20% to 50%, or 25% to 45%. The polyester film may have a $T_{90}$ of 30% to 90%, 40% to 80%, or 50% to 70%. The polyester film may have a $T_{100}$ of 40% to 90%, 50% to 80%, or 60% to 75%.

As a specific example, when the shrinkage rate in the main shrinkage direction of the polyester film upon thermal treatment at a temperature of X°C for 10 seconds is defined as Tx, $T_{70}$ may be 0% to 20%, $T_{75}$ may be 5% to 40%, $T_{80}$ may be 20% to 50%, and $T_{90}$ may be 40% to 80%.

When the polyester film according to an embodiment is fixed in the main shrinkage direction, the shrinkage rate in a direction perpendicular to the main shrinkage direction may be adjusted within a specific range.

For example, when the polyester film is fixed in the main shrinkage direction and thermally treated at 90°C for 10 seconds, SR% according to the following equation may be 10% or less.

$$SR\% = [(x1 - x2) / y] \times 100$$

In the above equation, x1 is the dimension (mm) before thermal treatment in a direction perpendicular to the main shrinkage direction, x2 is the dimension (mm) after thermal treatment in the direction perpendicular to the main shrinkage direction, and y is the dimension (mm) in the main shrinkage direction. Specifically, x2 is the smallest dimension among dimensions after thermal treatment in a direction perpendicular to the main shrinkage direction. The thermal treatment for obtaining the SR% value may refer to, for example, immersing the polyester film in hot water at 90°C for 10 seconds while both ends thereof in the main shrinkage direction are fixed.

Within the above range, even when the film is fixed in the main shrinkage direction, shrinkage defects or curling in a direction perpendicular thereto are more suppressed, thereby enhancing the appearance. Specifically, SR% may be 7% or less, more specifically, 0% to 10% or 0% to 7%.

In addition, in the polyester film according to an embodiment, the shrinkage stress in the main shrinkage direction may be adjusted within a specific range.

For example, the maximum stress in the main shrinkage direction of the polyester film upon thermal treatment at a temperature of 90°C for 1 minute may be 2 N to 6 N, specifically, 3 N to 4.5 N or 3.5 N to 4.5 N. In addition, the residual stress in the main shrinkage direction of the polyester film upon thermal treatment at a temperature of 90°C for 1 minute may be 1 N to 5 N, specifically, 2 N to 3.5 N or 2.5 N to 3.5 N. As a specific example, the maximum stress may be 3 N to 5 N and the residual stress may be 2 N to 3.5 N in the main shrinkage direction when the polyester film is thermally treated at a temperature of 90°C for 1 minute. Within the above ranges, it is advantageous in terms of stress applied to the container during heat shrinkage and adhesion to the container upon heat shrinkage.

The thermal treatment for obtaining the shrinkage stress may specifically refer to immersing the polyester film in hot water at 90°C for 1 minute while it is fixed in the main shrinkage direction. In addition, in the curve of stress with respect to time obtained in the shrinkage process, the stress at the highest point may be the maximum stress, and the stress at the end of the shrinkage time may be the residual stress.

The polyester film according to an embodiment may have a uniform appearance without distortion upon shrinkage.

For example, when the polyester film is partitioned into 500 to 1,000 lattice units of the same size and thermally treated at 75°C for 10 seconds, the number of uniformly shrunk lattice units is 90% or more, specifically 95% or more, of the total number of lattice units. The size of the lattice units may be the size obtained by equally dividing the polyester film into 600 to 800 pieces or 700 to 750 pieces.

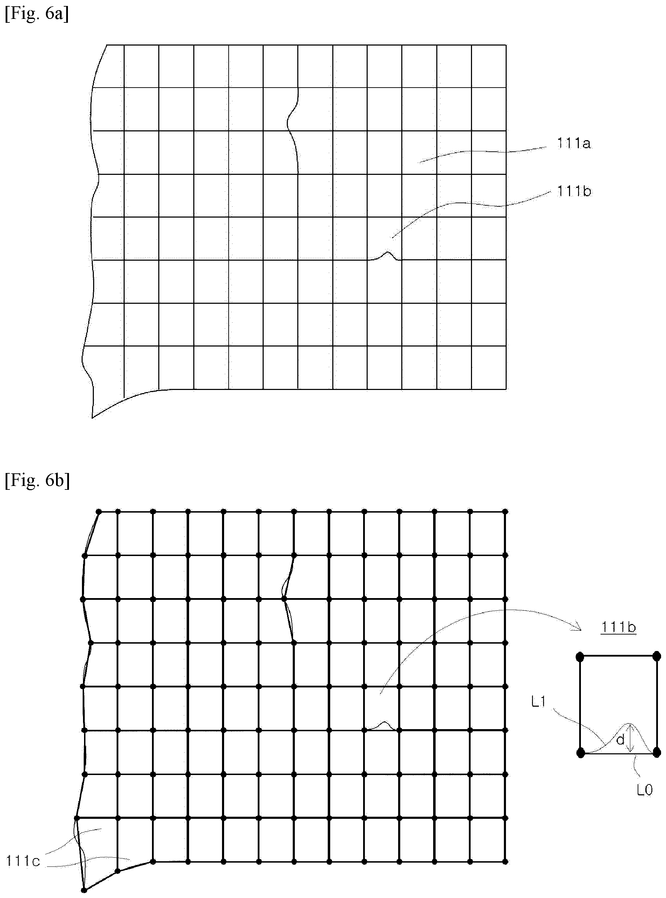

Fig. 6a shows an example of a polyester film that is partitioned into a plurality of lattice units of the same size and shrunk after thermal treatment.

As shown in Fig. 6a, the lattice units in the shrunk film have the shape of uniformly shrunk lattice units (11 1a) while maintaining a substantially rectangular shape. However, some of the lattice units in the shrunk film are distorted during the shrinkage process, resulting in non-uniformly shrunk lattice units (111b).

Thus, in order to quantitatively measure the degree of uniform or non-uniform shrinkage, a virtual rectangular lattice unit connecting the edges of a shrunk lattice unit (i.e., the intersection of the sides of a shrunk lattice unit or the vertex of a shrunk lattice unit) may be defined.

Fig. 6b shows that a virtual lattice unit is applied to the shrunk lattice units shown in Fig. 6a. In Fig. 6b, the shrunk lattice units are indicated by thin solid lines, and the virtual lattice units are indicated by thick solid lines.

As shown in Fig. 6b, the four sides of the uniformly shrunk lattice units match or have a slight difference from those of the virtual lattice units, whereas the side (L1) of the non-uniformly shrunk lattice unit (111b) and the side (L0) of the corresponding virtual lattice unit have a maximum spaced distance (d) between them. For example, when the maximum spaced distance (d) exceeds 10% of the size of the side (L0) of the virtual lattice unit, it may be determined as non-uniform shrinkage. On the other hand, when the maximum spaced distance (d) is within 10%, more specifically within 5%, of the size of the side (L0) of the virtual lattice unit, it may be determined as uniform shrinkage.

It is advantageous for enhancing the appearance of a heat-shrinkable label when the number of uniformly shrunk lattice units measured in this way is 90% or more, specifically 95% or more, of the total number of lattice units.

Specifically, when an area of 180 mm × 100 mm (width × length) in the polyester film is partitioned into square lattice units with a side size of 5 mm, and it is thermally treated at 75°C for 10 seconds to shrink, the first shrinkage uniformity calculated according to the following Equation (1) may be 90% or more.

$$\text{First shrinkage uniformity (\%)} = \text{number of uniformly shrunk lattice units / total number of lattice units (initial size of 5 mm)} \times 100 \,...\, (1)$$

When a virtual rectangular lattice unit connecting the edges of a shrunk lattice unit is defined, the number of uniformly shrunk lattice units in Equation (1) refers to the number of lattice units in which the maximum spaced distance between the four sides of the virtual rectangular lattice unit and the four sides of the corresponding shrunk lattice unit is within 10% of the size of each side of the virtual rectangular lattice unit.

However, non-uniform shrinkage that is not measurable by the above method may take place depending on the distortion of the shrunk film. For example, as shown in Fig. 6b, for the lattice unit (1 1 1c) having a large distortion as compared with the lattice unit, it may be hardly spaced apart from the side of the virtual lattice unit. As a result, it may not be measured as a non-uniformly shrunk lattice unit. The lattice unit (111c) having such a large distortion may be measured when the size of the lattice unit is increased.

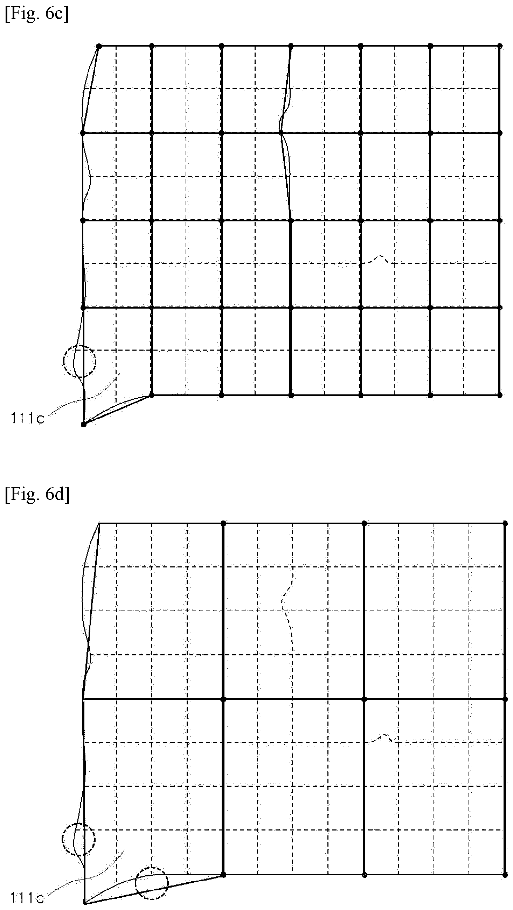

Figs. 6c and 6d each show that a virtual lattice unit is applied after the lattice units of Fig. 6b are partitioned by an increased size of 2 and 4 times, respectively, followed by shrinkage. In Figs. 6c and 6d, the original lattice units (prior to size increase) are indicated by dotted lines for reference, the lattice units with an increased size are indicated by thin solid lines, and the virtual lattice units are indicated by thick solid lines.

Referring to Fig. 6c, when the size of the lattice units is increased 2 times relative to that of Fig. 6b, a gap (see dotted line circle) between the side of the lattice unit (1 1 1c) having a large distortion and the side of the virtual lattice unit is gradually noticeable. In addition, referring to Fig. 6d, when the size of the lattice units is increased 4 times relative to that of Fig. 6b, a gap (see dotted line circle) between the side of the lattice unit (1 1 1c) having a large distortion and the side of the virtual lattice unit is remarkably noticed. As a result, it may be measured as a non-uniformly shrunk lattice unit.

Thus, it may be more advantageous for accurately determining the shrinkage uniformity to measure with various sizes of the lattice units.

For example, when an area of 180 mm $\times$ 100 mm (width $\times$ length) in the polyester film is partitioned into square lattice units with a side size of 1 cm, and it is thermally treated at 75°C for 10 seconds to shrink, the second shrinkage uniformity calculated according to the following Equation (2) may be 90% or more.

$$\text{Second shrinkage uniformity (\%)} = \text{number of uniformly shrunk lattice units} / \text{total number of lattice units (initial size of 1 cm)} \times 100 \text{ ... (2)}$$

When a virtual rectangular lattice unit connecting the edges of a shrunk lattice unit is defined, the number of uniformly shrunk lattice units in Equation (2) refers to the number of lattice units in which the maximum spaced distance between the four sides of the virtual rectangular lattice unit and the four sides of the corresponding shrunk lattice unit is within 10% of the size of each side of the virtual rectangular lattice unit.

In addition, when an area of 180 mm $\times$ 100 mm (width $\times$ length) in the polyester film is partitioned into square lattice units with a side size of 2 cm, and it is thermally treated at 75°C for 10 seconds to shrink, the third shrinkage uniformity calculated according to the following Equation (3) may be 90% or more.

$$\text{Third shrinkage uniformity (\%)} = \text{number of uniformly shrunk lattice units} / \text{total number of lattice units (initial size of 2 cm)} \times 100 \text{ ... (3)}$$

When a virtual rectangular lattice unit connecting the edges of a shrunk lattice unit is defined, the number of uniformly shrunk lattice units in Equation (3) refers to the number of lattice units in which the maximum spaced distance between the four sides of the virtual rectangular lattice unit and the four sides of the corresponding shrunk lattice unit is within 10% of the size of each side of the virtual rectangular lattice unit.

In addition, when an area of 180 mm $\times$ 100 mm (width $\times$ length) in the polyester film is partitioned into square lattice units with a side size of 4 cm, and it is thermally treated at 75°C for 10 seconds to shrink, the fourth shrinkage uniformity calculated according to the following Equation (4) may be 90% or more.

$$\text{Fourth shrinkage uniformity (\%)} = \text{number of uniformly shrunk lattice units} / \text{total number of lattice units (initial size of 4 cm)} \times 100 \text{ ... (4)}$$

When a virtual rectangular lattice unit connecting the edges of a shrunk lattice unit is defined, the number of uniformly shrunk lattice units in Equation (4) refers to the number of lattice units in which the maximum spaced distance between the four sides of the virtual rectangular lattice unit and the four sides of the corresponding shrunk lattice unit is within 10% of the size of each side of the virtual rectangular lattice unit.

In the measurement of such shrinkage uniformity, the transverse direction of the polyester film may be the main shrinkage direction of the polyester film.

In addition, the shrinkage uniformity may be measured by cutting the polyester film to a size of 180 mm $\times$ 100 mm (width $\times$ length), partitioning it into lattice units, and thermally treating it at 75°C for 10 seconds to shrink.

Alternatively, the thermal treatment for measuring the shrinkage uniformity may refer to rolling the polyester film round to form a sleeve with both ends in the main shrinkage direction adhered and immersing it in hot water at 75°C for 10 seconds. In such an event, an adhesion part having a width of 2 mm to 4 mm may be added to both ends of the polyester film, and the adhesion parts at both ends may be laminated to form a sleeve. To this end, the length of the polyester film may be cut to a length in light of the length of the adhesion parts before thermal treatment. As a specific example, the length of the polyester film is cut to 186 mm, and 3 mm at both ends may be used as an adhesion part. In addition, the immersion may be carried out once the sleeve-shaped film is wrapped around a cylindrical container having a diameter of 85% to 95% of its diameter. As a specific example, the diameter of the cylindrical container may be 40 mm to 60 mm, more specifically 45 mm to 55 mm. In addition, the length (height) of the cylindrical container may be 100% to 130%, specifically 110% to 120%, of the initial length of the polyester film in the longitudinal direction (that is, the length of the sleeve shape). For example, the length of the cylindrical container may be 100 mm to 130 mm, specifically 110 mm to 120 mm. In addition, the material of the cylindrical container may be a metal such as aluminum.

The polyester film may have a thickness of 10 $\mu$m to 100 $\mu$m. For example, the thickness of the polyester film may be 20 $\mu$m to 80 $\mu$m or 30 $\mu$m to 70 $\mu$m. Within the above range, it may be more advantageous in terms of shrinkage uniformity and printability of the film.

The polyester film may be one uniaxially stretched. For example, the stretching ratio of the polyester film in the main shrinkage direction may be 3 times to 6 times, 3.5 times to 5 times, 4 times to 5 times, 4 times to 4.5 times, 4.2 times to 5 times, or 4.2 times to 4.5 times. As an example, the polyester film may have a stretching ratio of 4 times to 5 times in the main shrinkage direction.

The main shrinkage direction of the polyester film may be the transverse direction (tenter direction, TD) or the longitudinal direction (machine direction, MD) of the film. As an example, the main shrinkage direction of the polyester film may be the transverse direction (TD), and a direction perpendicular to the main shrinkage direction may be the longitudinal direction (MD), but they are not particularly limited thereto.

**Composition of a polyester film**

The polyester film according to an embodiment comprises a copolymerized polyester resin.

For example, the copolymerized polyester resin may be one in which two or more diols and a dicarboxylic acid are polymerized. Specifically, the copolymerized polyester resin may be one in which three or more diols and a dicarboxylic acid are polymerized.

The diol may comprise an aliphatic diol, an alicyclic diol, an aromatic diol, or a derivative thereof. The aliphatic diol may be, for example, an aliphatic diol having 2 to 10 carbon atoms, and it may have a linear or branched structure.

As a specific example, the aliphatic diol may comprise ethylene glycol, diethylene glycol, neopentyl glycol, 1,3-propanediol, 1,2-octanediol, 1,3-octanediol, 2,3-butanediol, 1,3-butanediol, 1,4-butanediol, 1,5-pentanediol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, 1,6-hexanediol, 2-ethyl-3-methyl-1,5-hexanediol, 2-ethyl-3-ethyl-1,5-hexanediol, 1,7-heptanediol, 2-ethyl-3-methyl-1,5-heptanediol, 2-ethyl-3-ethyl-1,6-heptanediol, 1,8-octanediol, 1,9-nonanediol, 1,10-decanediol, a derivative thereof, or any combination thereof.

The dicarboxylic acid may comprise an aromatic dicarboxylic acid, an aliphatic dicarboxylic acid, an alicyclic dicarboxylic acid, or an ester thereof.

For example, the dicarboxylic acid may be terephthalic acid, dimethylterephthalic acid, isophthalic acid, naphthalene dicarboxylic acid, orthophthalic acid, adipic acid, azelaic acid, sebacic acid, decanedicarboxylic acid, an ester thereof, or a combination thereof. Specifically, the dicarboxylic acid may comprise at least one selected from the group consisting of terephthalic acid, dimethyl terephthalate, naphthalene dicarboxylic acid, and orthophthalic acid.

According to an embodiment, the copolymerized polyester resin may be one in which two or more diols and an aromatic dicarboxylic acid are polymerized. According to another embodiment, the copolymerized polyester resin may be one in which three or more diols and an aromatic dicarboxylic acid are polymerized. According to still another embodiment, the copolymerized polyester resin may be one in which a diol comprising ethylene glycol and one or more comonomers and an aromatic dicarboxylic acid are polymerized. According to still another embodiment, the copolymerized polyester resin may be one in which a diol comprising ethylene glycol and two or more comonomers and an aromatic dicarboxylic acid are polymerized.

The diol may comprise ethylene glycol in an amount of 50% by mole to 90% by mole based on the total number of moles of the diol. For example, the diol may comprise ethylene glycol in an amount of 60% by mole to 90% by mole, 63% by mole to 85% by mole, or 65% by mole to 83% by mole, based on the total number of moles of the diol.

The diol may comprise the comonomer in an amount of 10% by mole to 50% by mole based on the total number of moles of the diol. For example, the diol may comprise the comonomer in an amount of 10% by mole to 40% by mole, 15% by mole to 37% by mole, or 17% by mole to 35% by mole, based on the total number of moles of the diol.

The diol may comprise, as a comonomer, the diols exemplified above except for ethylene glycol. For example, the diol may comprise, as a comonomer, diethylene glycol, 1,4-cyclohexanedimethanol, 1,3-propanediol, 1,2-octanediol, 1,3-octanediol, 2,3-butanediol, 1,3-butanediol, 1,4-butanediol, 1,5-pentanediol, neopentyl glycol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, or a combination thereof. Specifically, the diol may comprise at least one selected from the group consisting of neopentyl glycol, cyclohexanedimethanol, and diethylene glycol as a comonomer.

Specifically, the diol may comprise diethylene glycol as a comonomer. The content of diethylene glycol in the diol may be 1% by mole to 15% by mole, for example, 1% by mole to 10% by mole, 1% by mole to 5% by mole, 5% by mole to 10% by mole, or 3% by mole to 7% by mole.

In addition, the diol may comprise, as a comonomer, at least one of neopentyl glycol and cyclohexanedimethanol. For example, the content of neopentyl glycol and/or cyclohexanedimethanol in the diol may be 1% by mole to 50% by mole, for example, 10% by mole to 40% by mole, 10% by mole to 30% by mole, 20% by mole to 40% by mole, 20% by mole to 30% by mole, 20% by mole to 25% by mole, or 25% by mole to 30% by mole.

Specifically, the diol may comprise, as a comonomer, at least one selected from neopentyl glycol and cyclohexanedimethanol; and diethylene glycol.

As an example, the diol may comprise, as a comonomer, at least one selected from neopentyl glycol and cyclohexanedimethanol in an amount of 20% by mole to 30% by mole; and diethylene glycol in an amount of 1% by mole to 15% by mole.

The dicarboxylic acid may comprise terephthalic acid or dimethyl terephthalic acid in an amount of 80% by mole or more, 90% by mole or more, or 95% by mole or more, based on the total number of moles of the dicarboxylic acid. However, the dicarboxylic acid may comprise almost no isophthalic acid. For example, the content of isophthalic acid in the dicarboxylic acid may be 5% by mole or less, 3% by mole or less, or 1% by mole or less.

Specifically, the diol may comprise, as a comonomer, at least one selected from the group consisting of neopentyl glycol, cyclohexanedimethanol, diethylene glycol, and a combination thereof in an amount of 20% by mole to 40% by mole, and the content of isophthalic acid in the aromatic dicarboxylic acid may be less than 1% by mole.

As a specific example, the copolymerized polyester resin may be a glycol-modified polyethylene terephthalate (PETG).

The copolymerized polyester resin may further comprise an alcohol other than the diol, for example, a monohydric alcohol. For example, the monohydric alcohol may be methanol, ethanol, isopropanol, allyl alcohol, or benzyl alcohol. Specifically, the copolyester resin may comprise the monohydric alcohol in an amount of 10 parts by weight to 40 parts by weight or 15 parts by weight to 30 parts by weight based on 100 parts by weight of the diol.

**Process for preparing a polyester film**

The polyester film according to an embodiment may be prepared by a process, which comprises preparing a copolymerized polyester resin; melting and casting the copolymerized polyester resin to obtain a film; and preheating and stretching the cast film and then heat-setting it.

Here, the composition and process conditions are adjusted such that the polyester film finally produced by the above process satisfies the characteristics (shrinkage characteristics and the like) as described above. Specifically, in order for the final polyester film to satisfy the characteristics as discussed above, the composition of the copolymerized polyester resin is adjusted, the extrusion and casting temperatures of the copolymerized polyester resin are adjusted, the preheating temperature, the stretching ratio in each direction, the stretching temperature, the stretching speed, and the like at the time of stretching are adjusted, or thermal treatment and relaxation is carried out after stretching while the thermal treatment temperature and relaxation rate are adjusted.

Hereinafter, each step will be described in more detail.

The copolymerized polyester resin may be prepared through a transesterification reaction and a polycondensation reaction. In such an event, the components and contents of the diol and dicarboxylic acid used are as exemplified above.

Thereafter, the copolymerized polyester resin may be melted at a temperature of 260°C to 300°C or 270°C to 290°C and then extruded and cast to obtain a film.

The cast film may be conveyed at a speed of 10 m/minute to 110 m/minute or 50 m/minute to 90 m/minute to pass through a roll and then preheated.

The preheating may be carried out, for example, at 90°C to 120°C for 0.01 minute to 1 minute. Specifically, the preheating temperature may be 95°C to 115°C or 97°C to 113°C, and the preheating time may be 0.05 minute to 0.5 minute or 0.08 minute to 0.2 minute, but they are not limited thereto.

Thereafter, the film may be stretched in a first direction. For example, the stretching may be carried out at a temperature lower than the preheating temperature by at least 20°C in a first direction by 3 times to 5 times. Specifically, the stretching may be carried out at a stretching temperature of 60°C to 90°C, 70°C to 90°C, or 75°C to 85°C, in a first direction by 3 times to 4.5 times, 3.5 times to 4.5 times, 4 times to 4.5 times, 4 times to 5 times, 4.2 times to 5 times, or 4.2 times to 4.5 times, but it is not limited thereto. The stretching may be further carried out in a second direction perpendicular to the first direction. For example, it may be carried out in a second direction at a stretching ratio of 1.1 times to 2 times, specifically, 1.1 times to 1.5 times, as needed.

After stretching, the film may be heat-set. For example, it may be carried out at 70°C to 95°C for 0.01 minute to 1 minute. For example, the heat-setting temperature may be 75°C to 95°C, 75°C to 90°C, 80°C to 90°C, 85°C to 95°C, or 85°C to 90°C, and the heat-setting time may be 0.05 minute to 0.5 minute or 0.08 minute to 0.2 minute. But they are not limited thereto.

Specifically, the difference between the preheating temperature and the heat-setting temperature may be 10°C to 40°C, more specifically, 13°C to 35°C, 11°C to 34°C, 15°C to 34°C, or 20°C to 30°C.

**Effects and uses**

The polyester film according to the embodiment shrinks uniformly in a heat shrinkage process since the slope of the shrinkage rate for each temperature section is adjusted. Thus, it can be closely adhered to a container without appearance defects such as distortion or curling upon shrinkage. In addition, such shrinkage characteristics of the polyester film can be achieved in a desired range by controlling the components and contents of a copolymerized polyester resin constituting it and controlling the process conditions in the preparation process.

Accordingly, the polyester film according to the embodiment can be advantageously applied as a heat-shrinkable label or packaging material to containers of various products including beverages and foods. The heat-shrinkable label or packaging material according to an embodiment comprises the polyester film, and it may further comprise a printing layer, a dye, an adhesive, or the like.

**Mode for the Invention**

Hereinafter, although embodiments are described, the scope to be implemented is not limited thereto.

**Examples and Comparative Examples: Preparation of a polyester film**

(1) Preparation of a copolymerized polyester resin

An autoclave equipped with a stirrer and a distillation column was charged with terephthalic acid as a dicarboxylic acid and ethylene glycol and a comonomer as a diol. 0.07 part by weight of manganese acetate as a transesterification catalyst relative to the weight of the dicarboxylic acid was added thereto, followed by heating the mixture to 220°C and the removal of methanol produced as a byproduct to carry out the reaction.

Upon completion of the transesterification reaction, 0.07 part by weight of silica having an average particle diameter of 0.28 $\mu$m was added, and 0.4 part by weight of trimethyl phosphate as a stabilizer was added, relative to 100 parts by weight of the dicarboxylic acid. After 5 minutes, 0.035 part by weight of antimony trioxide and 0.005 part by weight of tetrabutylene titanate as a polymerization catalyst were added, followed by stirring for 10 minutes. Subsequently, the reaction mixture was transferred to a second reactor equipped with a vacuum apparatus. The pressure was gradually reduced while the temperature was raised to 285°C, and the polymerization was carried out for about 210 minutes to thereby prepare a composition comprising a copolymerized polyester resin.

(2) Preparation of a film

The composition comprising a copolymerized polyester resin obtained in step (1) was extruded through a T-die at 270°C and then cooled to thereby obtain an unstretched sheet, which was passed through a roll to adjust the thickness. The unstretched sheet was preheated at 100 to 110°C for 0.1 minute while it was conveyed at a speed of 55 m/minute and stretched 4.0 to 4.5 times in the transverse direction (TD) at a temperature lower than that by at least 20°C. The stretched sheet was heat set for 0.1 minute to prepare a polyester film having a thickness of 40 $\mu$m.

The components and contents of the comonomers and the process conditions used in the Examples and Comparative Examples are summarized in the table below.

[Table 1]

| | Comonomer content (% by mole) | | | | TD stretching ratio | Heat setting Temp. (°C) |
|---|---|---|---|---|---|---|
| | NPG | CHDM | DEG | IPA | | |
| Ex. 1 | 24 | - | 5 | - | 4.5 | 92 |
| Ex. 2 | - | 22 | 10 | - | 4.5 | 90 |
| Ex. 3 | 30 | - | 5 | - | 4.5 | 90 |
| Ex. 4 | - | 30 | 2 | - | 4.5 | 89 |

(continued)

| | Comonomer content (% by mole) | | | | TD stretching ratio | Heat setting Temp. (°C) |
|---|---|---|---|---|---|---|
| | NPG | CHDM | DEG | IPA | | |
| C. Ex. 1 | 17 | - | 5 | - | 4.15 | 65 |
| C. Ex. 2 | 17 | - | 5 | - | 4.15 | 94 |
| C. Ex. 3 | 15.8 | - | 1.8 | 5.3 | 4.15 | 90 |
| NPG: neopentyl glycol, CHDM: 1,4-cyclohexanedimethanol, DEG: diethylene glycol, IPA: isophthalic acid | | | | | | |

**Test Example 1: Heat shrinkage rate**

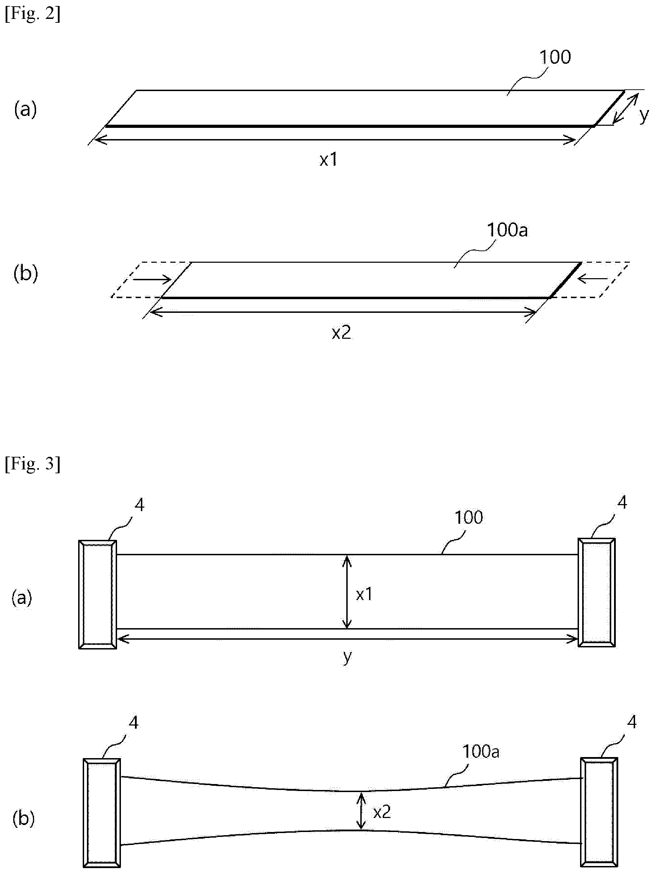

Fig. 2 shows a method of measuring the shrinkage of a polyester film. Referring to Fig. 2, a polyester film (100) was cut to have an initial dimension (x1) of 300 mm in the direction to be measured and a dimension (y) of 15 mm in the direction perpendicular thereto. It was immersed in a heated water bath for 10 seconds, and the dimension (x2) of the shrunk polyester film (100a) was measured and calculated according to the following equation.

$$\text{Shrinkage rate (\%)} = [(x1 - x2) / x1] \times 100$$

$$T_{a-b} \ (\%/°C) = \frac{shrinkage \ at \ a°C \ (\%) - shrinkage \ at \ b°C \ (\%)}{a \ (°C) - b \ (°C)}$$

The shrinkage rate (%) and $T_{a-b}$ (%/°C) were obtained in the transverse direction (TD), which is the main shrinkage direction of the film. The results are shown in the table below.

[Table 2]

| | TD shrinkage (%) | | | | | $T_{a-b}$ (%/°C) | |
|---|---|---|---|---|---|---|---|
| | 70°C | 75°C | 80°C | 90°C | 100°C | $T_{75-70}$ | $T_{90-80}$ |
| Ex. 1 | 2.7 | 11.7 | 26.7 | 56.3 | 67.3 | 1.8 | 2.96 |
| Ex. 2 | 11.3 | 22.7 | 32.4 | 50 | 61.3 | 2.28 | 2.06 |
| Ex. 3 | 15 | 30 | 44 | 70 | 74 | 3 | 2.6 |
| Ex. 4 | 5 | 17 | 35 | 55 | 70 | 2.4 | 2 |
| C. Ex. 1 | 50 | 66 | 72 | 75.3 | 76 | 3.2 | 0.33 |
| C. Ex. 2 | 5 | 17 | 32 | 46 | 57 | 2.4 | 1.4 |
| C. Ex. 3 | 0 | 2 | 18 | 41 | 56 | 0.4 | 2.3 |

As can be seen from the above table, in the polyester films of Examples 1 to 4, the shrinkage rate in the main shrinkage direction with respect to temperature and the slope of shrinkage rate with respect to temperature section were all within the preferred ranges.

**Test Example 2: Skirt ratio**

Fig. 3 shows a method of measuring the skirt ratio of a polyester film. Referring to Fig. 3, a polyester film (100) was cut to an initial dimension (x1) of 60 mm in the direction to be measured and fixed to heat setting frames (4) having a width (y) of 115 mm. It was immersed in a water bath at 90°C for 10 seconds, and the reduced dimension (x2) was then measured. In this Test Example, it was fixed in the transverse direction (TD) as the main shrinkage direction, and the length after shrinkage in the longitudinal direction (MD) perpendicular thereto was measured for the calculation according to the following equation.

$$\Delta SR \ (mm) = x1 \ (mm) - x2 \ (mm)$$

$$SR\% \ (\%) = [\Delta SR \ (mm) \ / \ y \ (mm)] \times 100$$

**Test Example 3: Shrinkage stress**

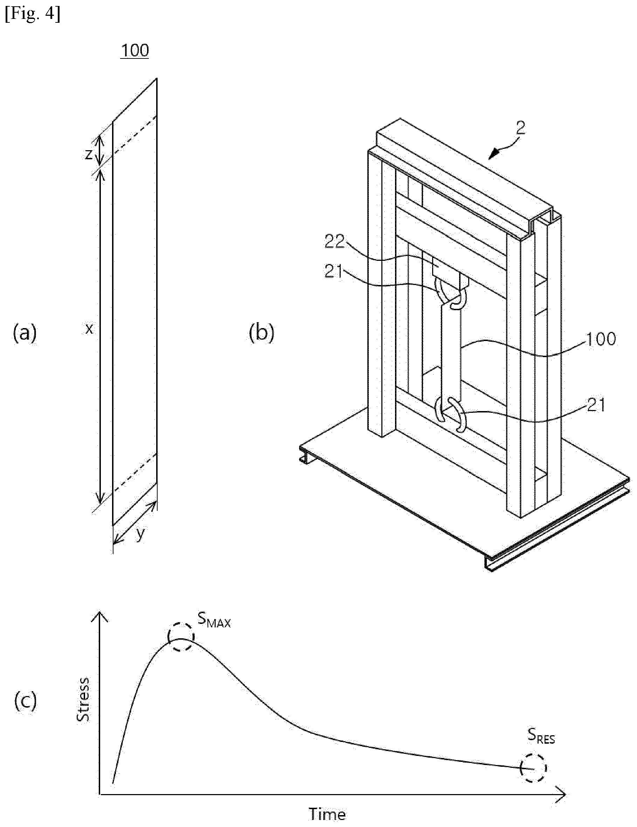

Fig. 4 shows a method of measuring the shrinkage stress of a polyester film. Referring to Fig. 4, a polyester film (100) was cut to have an initial dimension (x) of 110 mm in the direction to be measured, an extra dimension (z) of 5 mm at both ends, and a dimension (y) of 15 mm in the direction perpendicular thereto. The cut film was set in a stress tester (2), and both ends of the film were fixed to jigs (21) at an interval of 100 mm. The measurement device in which the film had been set was immersed in a water bath at 90°C for 1 minute, and the maximum stress ($S_{MAX}$) in the shrinkage process and the residual stress after shrinkage ($S_{RES}$) were measured with a load cell (22).

The results of the above test examples are shown in the table below.

[Table 3]

|  | Shrinkage stress (N) | | $\Delta SR$ (mm) | SR% (%) |
|---|---|---|---|---|
|  | Max. | residual | | |
| Ex. 1 | 4.0 | 3.4 | 8 | 7.0 |
| Ex. 2 | 3.7 | 2.9 | 8 | 7.0 |
| Ex. 3 | 4.5 | 3.0 | 6 | 5.2 |
| Ex. 4 | 4.4 | 3.1 | 6 | 5.2 |
| C. Ex. 1 | 7.5 | 5.5 | 18 | 15.7 |
| C. Ex. 2 | 4.9 | 4.0 | 12 | 10.4 |
| C. Ex. 3 | 4.7 | 3.6 | 8 | 7.0 |

As can be seen from the above table, in the polyester films of Examples 1 to 4, the shrinkage stress and the skirt ratio were all within the preferred ranges.

**Test Example 4: Shrinkage uniformity**

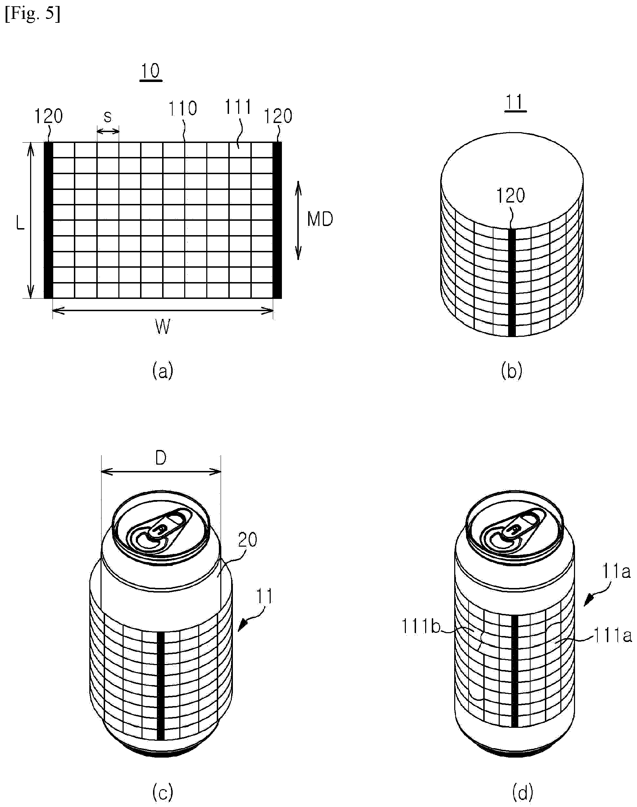

Fig. 5 shows a method of measuring the shrinkage uniformity of a polyester film.

Referring to Fig. 5(a), in order to prepare a heat-shrinkable label (10), a lattice (110) was printed on a polyester film, and an adhesion part (120) having a width of 3 mm was provided to both ends in the main shrinkage direction (TD). The dimensions of the heat-shrinkable label were 180 mm in width (W) and 100 mm in length (L) excluding the adhesion parts (120), and a lattice unit (111) in the form of a square having a side size (s) of 5 mm was formed by 36 units in the transverse direction and 20 units in the longitudinal direction of the heat-shrinkable label.

Referring to Fig. 5(b), a solvent (THF, etc.) was applied to the adhesion parts (120) at both ends of the heat-shrinkable label, which were bonded to prepare a sleeve-shaped label (11).

Referring to Fig. 5(c), the sleeve-shaped label (11) was loosely wrapped around the middle of a can (20) having a diameter (D) of 52 mm and a height of 116 mm, which was then immersed in hot water of 75°C for 10 seconds.

Referring to Fig. 5(d), in the shrunk label (11a), uniformly shrunk lattice units (111a) and non-uniformly shrunk lattice units (111b) were observed.

Referring to Figs. 6a to 6d, a virtual rectangular lattice unit connecting the edges of a shrunk lattice unit is defined, and the degree of the spaced distance between the four sides of the virtual rectangular lattice unit and the four sides of the corresponding shrunk lattice unit was measured to calculate shrinkage uniformity (%) according to the following equation.

-   Uniformly shrunk lattice units (111a): refer to the lattice units in which the maximum spaced distance between the four sides of the virtual rectangular lattice unit and the four sides of the corresponding shrunk lattice unit is within 10% of the size of each side of the virtual rectangular lattice unit
-   Non-uniformly shrunk lattice units (111b): refer to the lattice units in which the maximum spaced distance (d) between the four sides of the virtual rectangular lattice unit and the four sides of the corresponding shrunk lattice unit exceeds 10% of the size of each side (L0) of the virtual rectangular lattice unit

$$\text{Shrinkage uniformity } (\%) = (\text{number of uniformly shrunk lattice units} / \text{total number of lattice units}) \times 100$$

The results of the above test examples are shown in the table below.

[Table 4]

| | Shrinkage uniformity (%) | | | |
|---|---|---|---|---|
| | Initial lattice size of 5 mm | Initial lattice size of 1 mm | Initial lattice size of 2 mm | Initial lattice size of 4 mm |
| Ex. 1 | 98 | 98 | 99 | 100 |
| Ex. 2 | 92 | 91 | 98 | 97 |
| Ex. 3 | 94 | 97 | 100 | 100 |
| Ex. 4 | 92 | 93 | 97 | 96 |
| C. Ex. 1 | 89 | 87 | 92 | 89 |
| C. Ex. 2 | 88 | 86 | 88 | 88 |
| C. Ex. 3 | 85 | 85 | 87 | 87 |

As can be seen from the above table, in the polyester films of Examples 1 to 4, the shrinkage uniformity measured under various lattice sizes was within the preferred range. On the other hand, in the polyester films of Comparative Examples 1 to 3, the shrinkage uniformity measured under various lattice sizes was outside the preferred range.

## Claims

1. A polyester film, which comprises a copolymerized polyester resin in which a diol comprising ethylene glycol and one or more comonomers; and an aromatic dicarboxylic acid are polymerized,
wherein when $T_{a\text{-}b}$ is defined as in the following equation, $T_{75\text{-}70}$ is 1%/°C to 3%/°C, and $T_{90\text{-}80}$ is 2%/°C to 3%/°C in the main shrinkage direction:

$$T_{a-b} \; (\%/°C) = \frac{shrinkage\; at\; a°C \; (\%) - shrinkage\; at\; b°C \; (\%)}{a\; (°C) - b\; (°C)} .$$

2. The polyester film of claim 1, wherein when the shrinkage rate in the main shrinkage direction of the polyester film upon thermal treatment at a temperature of X°C for 10 seconds is defined as Tx, $T_{70}$ is 0% to 20%, $T_{75}$ is 5% to 40%, $T_{80}$ is 20% to 50%, and $T_{90}$ is 40% to 80%.

3. The polyester film of claim 1, wherein when the polyester film is fixed in the main shrinkage direction and thermally treated at 90°C for 10 seconds, SR% according to the following equation is 10% or less:

$$SR\% = [(x1 - x2) / y] \times 100$$

in the above equation, x1 is the dimension (mm) before thermal treatment in a direction perpendicular to the main shrinkage direction, x2 is the dimension (mm) after thermal treatment in the direction perpendicular to the main shrinkage direction, and y is the dimension (mm) in the main shrinkage direction.

4. The polyester film of claim 1, wherein the maximum stress is 3 N to 5 N, and the residual stress is 2 N to 3.5 N, in the main shrinkage direction when the polyester film is thermally treated at a temperature of 90°C for 1 minute.

5. The polyester film of claim 1, wherein when an area of 180 mm × 100 mm (width × length) in the polyester film is partitioned into square lattice units with a side size of 5 mm, and it is thermally treated at 75°C for 10 seconds to shrink, the first shrinkage uniformity calculated according to the following Equation (1) is 90% or more:

$$\text{First shrinkage uniformity (\%)} = \text{number of uniformly shrunk lattice units / total number of lattice units (initial size of 5 mm)} \times 100 \ ... \ (1)$$

wherein when a virtual rectangular lattice unit connecting the edges of a shrunk lattice unit is defined, the number of uniformly shrunk lattice units in Equation (1) refers to the number of lattice units in which the maximum spaced distance between the four sides of the virtual rectangular lattice unit and the four sides of the corresponding shrunk lattice unit is within 10% of the size of each side of the virtual rectangular lattice unit.

6. The polyester film of claim 5, wherein when an area of 180 mm × 100 mm (width × length) in the polyester film is partitioned into square lattice units with a side length of 1 cm, and it is thermally treated at 75°C for 10 seconds to shrink, the second shrinkage uniformity calculated according to the following Equation (2) is 90% or more:

$$\text{Second shrinkage uniformity (\%)} = \text{number of uniformly shrunk lattice units / total number of lattice units (initial size of 1 cm)} \times 100 \ ... \ (2)$$

wherein when a virtual rectangular lattice unit connecting the edges of a shrunk lattice unit is defined, the number of uniformly shrunk lattice units in Equation (2) refers to the number of lattice units in which the maximum spaced distance between the four sides of the virtual rectangular lattice unit and the four sides of the corresponding shrunk lattice unit is within 10% of the size of each side of the virtual rectangular lattice unit.

7. The polyester film of claim 6, wherein when an area of 180 mm × 100 mm (width × length) in the polyester film is partitioned into square lattice units with a side length of 2 cm, and it is thermally treated at 75°C for 10 seconds to shrink, the third shrinkage uniformity calculated according to the following Equation (3) is 90% or more:

$$\text{Third shrinkage uniformity (\%)} = \text{number of uniformly shrunk lattice units / total number of lattice units (initial size of 2 cm)} \times 100 \ ... \ (3)$$

wherein when a virtual rectangular lattice unit connecting the edges of a shrunk lattice unit is defined, the number of uniformly shrunk lattice units in Equation (3) refers to the number of lattice units in which the maximum spaced distance between the four sides of the virtual rectangular lattice unit and the four sides of the corresponding shrunk lattice unit is within 10% of the size of each side of the virtual rectangular lattice unit.

8. The polyester film of claim 7, wherein when an area of 180 mm × 100 mm (width × length) in the polyester film is partitioned into square lattice units with a side length of 4 cm, and it is thermally treated at 75°C for 10 seconds to shrink, the fourth shrinkage uniformity calculated according to the following Equation (4) is 90% or more:

$$\text{Fourth shrinkage uniformity (\%)} = \text{number of uniformly shrunk lattice units / total number of lattice units (initial size of 4 cm)} \times 100 \ ... \ (4)$$

wherein when a virtual rectangular lattice unit connecting the edges of a shrunk lattice unit is defined, the number of uniformly shrunk lattice units in Equation (4) refers to the number of lattice units in which the maximum spaced distance between the four sides of the virtual rectangular lattice unit and the four sides of the corresponding shrunk lattice unit is within 10% of the size of each side of the virtual rectangular lattice unit.

9. The polyester film of any one of claims 5 to 8, wherein the transverse direction of the polyester film is the main shrinkage direction of the polyester film.

10. The polyester film of claim 1, wherein the diol comprises, as a comonomer, at least one selected from the group consisting of neopentyl glycol, cyclohexanedimethanol, diethylene glycol, and a combination thereof in an amount of 20% by mole to 40% by mole, and the content of isophthalic acid in the aromatic dicarboxylic acid may be less than 1% by mole.

11. The polyester film of claim 1, wherein the diol comprises, as a comonomer, at least one selected from neopentyl glycol and cyclohexanedimethanol in an amount of 20% by mole to 30% by mole; and diethylene glycol in an amount of 1% by mole to 15% by mole.

12. The polyester film of claim 1, wherein the polyester film has a stretching ratio of 4 times to 5 times in the main shrinkage direction.

13. A heat-shrinkable label, which comprises the polyester film of claim 1.

14. A heat-shrinkable packaging material, which comprises the polyester film of claim 1.

[Fig. 1a]

[Fig. 1b]

[Fig. 2]

(a)

100

x1

y

(b)

100a

x2

[Fig. 3]

4

100

4

(a)

x1

y

4

4

(b)

100a

x2

[Fig. 4]

(a)

(b)

(c)

[Fig. 5]

(a)

(b)

(c)

(d)

[Fig. 6a]

[Fig. 6b]

[Fig. 6c]

111c

[Fig. 6d]

111c

## INTERNATIONAL SEARCH REPORT

| | International application No. |
|---|---|
| | **PCT/KR2021/013450** |

**A. CLASSIFICATION OF SUBJECT MATTER**

**C08J 5/18**(2006.01)i; **C08G 63/181**(2006.01)i

According to International Patent Classification (IPC) or to both national classification and IPC

**B. FIELDS SEARCHED**

Minimum documentation searched (classification system followed by classification symbols)

C08J 5/18(2006.01); B29C 48/00(2019.01); B29C 48/88(2019.01); B29C 61/02(2006.01); B29C 61/06(2006.01); C08L 67/00(2006.01); C09J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에틸렌글리콜(ethylene glycol), 디올(diol), 방향족 디카복실산(aromatic carboxylic acid), 테레프탈산(terephthalic acid), 열수축(heat shrinkable), 폴리에스테르(polyester), 필름(film), 라벨(label)

**C. DOCUMENTS CONSIDERED TO BE RELEVANT**

| Category* | Citation of document, with indication, where appropriate, of the relevant passages | Relevant to claim No. |
|---|---|---|
| X | KR 10-0981129 B1 (SKC CO., LTD.) 10 September 2010 (2010-09-10)<br>See abstract; paragraphs [0015] and [0050]-[0059]; claims 1 and 3; example 2; tables 1 and 3; and figure 1. | 1-4,10-14 |
| A | | 5-9 |
| A | KR 10-2019-0132783 A (SKC CO., LTD.) 29 November 2019 (2019-11-29)<br>See abstract; paragraphs [0113]-[0118] and [0129]; example 1; and table 1. | 1-14 |
| A | JP 2001-247688 A (MITSUBISHI ENGINEERING PLASTICS CORP. et al.) 11 September 2001 (2001-09-11)<br>See claims 1-7; and example 1. | 1-14 |
| A | KR 10-2013-0068928 A (TORAY ADVANCED MATERIALS KOREA INC.) 26 June 2013 (2013-06-26)<br>See claims 1-8; example 1; and table 1. | 1-14 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 January 2022** | **13 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/013450** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2009-0053702 A (KOLON CORPORATION) 27 May 2009 (2009-05-27)<br>See claims 1-14. | 1-14 |
| A | JP 2009-114422 A (TOYOBO CO., LTD.) 28 May 2009 (2009-05-28)<br>See claims 1-7; and example 1. | 1-14 |

Form PCT/ISA/210 (second sheet) (July 2019)

# EP 4 234 612 A1

**INTERNATIONAL SEARCH REPORT**
Information on patent family members

International application No.

**PCT/KR2021/013450**

| Patent document cited in search report | | | Publication date (day/month/year) | Patent family member(s) | | | Publication date (day/month/year) |
|---|---|---|---|---|---|---|---|
| KR | 10-0981129 | B1 | 10 September 2010 | CN | 102190867 | A | 21 September 2011 |
| | | | | CN | 102190867 | B | 21 October 2015 |
| | | | | EP | 2365025 | A1 | 14 September 2011 |
| | | | | HK | 1160878 | A1 | 17 August 2012 |
| | | | | JP | 2011-184690 | A | 22 September 2011 |
| | | | | JP | 5971897 | B2 | 17 August 2016 |
| | | | | TW | 201139531 | A | 16 November 2011 |
| | | | | TW | I429691 | B | 11 March 2014 |
| | | | | US | 2011-0224369 | A1 | 15 September 2011 |
| | | | | US | 8632865 | B2 | 21 January 2014 |
| KR | 10-2019-0132783 | A | 29 November 2019 | AU | 2018-205116 | A1 | 05 December 2019 |
| | | | | AU | 2018-205116 | B2 | 16 July 2020 |
| | | | | CN | 108908922 | A | 30 November 2018 |
| | | | | CN | 108908922 | B | 18 December 2020 |
| | | | | EP | 3572451 | A1 | 27 November 2019 |
| | | | | KR | 10-2153670 | B1 | 08 September 2020 |
| | | | | TW | 202003649 | A | 16 January 2020 |
| | | | | TW | I681989 | B | 11 January 2020 |
| | | | | US | 10994880 | B2 | 04 May 2021 |
| | | | | US | 2019-0352032 | A1 | 21 November 2019 |
| | | | | US | 2021-0221546 | A1 | 22 July 2021 |
| JP | 2001-247688 | A | 11 September 2001 | JP | 4535553 | B2 | 01 September 2010 |
| KR | 10-2013-0068928 | A | 26 June 2013 | KR | 10-1330259 | B1 | 15 November 2013 |
| KR | 10-2009-0053702 | A | 27 May 2009 | CN | 101910261 | A | 08 December 2010 |
| | | | | CN | 101910261 | B | 16 December 2015 |
| | | | | CN | 102898792 | A | 30 January 2013 |
| | | | | CN | 102898792 | B | 26 August 2015 |
| | | | | CN | 102898793 | A | 30 January 2013 |
| | | | | CN | 102898793 | B | 24 June 2015 |
| | | | | EP | 2217643 | A2 | 18 August 2010 |
| | | | | EP | 2217643 | B1 | 11 April 2018 |
| | | | | EP | 2789647 | A1 | 15 October 2014 |
| | | | | EP | 2789647 | B1 | 13 June 2018 |
| | | | | JP | 2011-503339 | A | 27 January 2011 |
| | | | | JP | 5686601 | B2 | 18 March 2015 |
| | | | | KR | 10-1262435 | B1 | 08 May 2013 |
| | | | | KR | 10-1305663 | B1 | 09 September 2013 |
| | | | | KR | 10-1317491 | B1 | 15 October 2013 |
| | | | | KR | 10-1335222 | B1 | 29 November 2013 |
| | | | | KR | 10-2009-0051709 | A | 22 May 2009 |
| | | | | KR | 10-2009-0061574 | A | 16 June 2009 |
| | | | | US | 2011-0172386 | A1 | 14 July 2011 |
| | | | | US | 9187637 | B2 | 17 November 2015 |
| | | | | WO | 2009-066928 | A2 | 28 May 2009 |
| | | | | WO | 2009-066928 | A3 | 06 August 2009 |
| JP | 2009-114422 | A | 28 May 2009 | WO | 2009-051167 | A1 | 23 April 2009 |

Form PCT/ISA/210 (patent family annex) (July 2019)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20020062838